Europäisches Patentamt

European Patent Office

Office européen des brevets

(11) Publication number: **0 388 159**
**A2**

## EUROPEAN PATENT APPLICATION

(21) Application number: 90302686.2

(51) Int. Cl.⁵: **B01L 3/00**

(22) Date of filing: **14.03.90**

(30) Priority: **15.03.89 JP 63166/89**
**15.03.89 JP 63169/89**
**15.03.89 JP 63170/89**

(43) Date of publication of application:
**19.09.90 Bulletin 90/38**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Sakabe, Munechika**
**c/o Seiko Instruments Inc., 31-1, Kameido**
**6-chome**
**Koto-ku, Tokyo(JP)**
Inventor: **Segawa, Osamu**
**c/o Seiko Instruments Inc., 31-1, Kameido**
**6-chome**
**Koto-ku, Tokyo(JP)**

(74) Representative: **Miller, Joseph et al**
**J. MILLER & CO. Lincoln House 296-302 High**
**Holborn**
**London WC1V 7JH(GB)**

(54) **Apparatus for sealing liquid within cavities.**

(57) Apparatus for sealing liquid within cavities comprising a tray (20; 40; 60) a surface (20a; 40a; 60a) of which has cavities (21; 41; 61) therein for storing liquid (A), the cavities (21; 41; 61) having openings (8; 47; 57) arranged at varying levels in the thickness direction of the tray (20; 40; 60); a flexible sealing member (9; 32; 67) which contacts the said surface (20a; 40a; 60a); and a pressure plate (29; 49; 51) for applying pressure to the sealing member (9; 32; 67) so as to force the latter against the said surface (20a; 40a; 60a) characterized in that the sealing member (9; 32; 67) is arranged to be forced by the pressure plate (29; 49; 51) into a position in which it seals each of the said openings (8; 47; 57) so as to prevent evaporation of liquid (A) in the said cavities (21; 41; 61).

FIG.2

## APPARATUS FOR SEALING LIQUID WITHIN CAVITIES

The present invention relates to apparatus for sealing liquid within cavities and, although it is not so restricted, it relates more particularly to apparatus for sealing cavities containing solutions on a reagent tray so as to prevent evaporation during a thermal reaction.

According to the present invention, there is provided apparatus for sealing liquid within cavities comprising a tray a surface of which has cavities therein for storing liquid, the cavities having openings arranged at varying levels in the thickness direction of the tray; a flexible sealing member which contacts the said surface; and a pressure plate for applying pressure to the sealing member so as to force the latter against the said surface characterized in that the sealing member is arranged to be forced by the pressure plate into a position in which it seals each of the said openings so as to prevent evaporation of liquid in the said cavities.

In one embodiment, the sealing member has a space therein which is filled with viscous fluid, the pressure plate causing flow of the viscous fluid so that the sealing member is deformed locally so as to seal each of the openings.

In another embodiment, the sealing member has projections thereon arranged in registration with the respective cavities, the pressure plate contacting the projections and applying pressure thereto which deforms the sealing member locally so as to seal each of the openings.

In yet another embodiment, the pressure plate has projections which contact the sealing member and which are in registration with the respective cavities, whereby the sealing member is deformed locally by the pressure plate so as to seal each of the openings.

The apparatus is preferably provided with heating means for heating liquid in the cavities.

The invention is illustrated, merely by way of example, in the accompanying drawings, in which:-

Figure 1 is a partly broken view of a sealing member which may be used in an apparatus according to the present invention;

Figure 2 is a sectional view showing a first embodiment of an apparatus according to the present invention utilizing the Figure 1 sealing member;

Figure 3 is a partial perspective view of another sealing member which may be used in an apparatus according to the present invention;

Figure 4 is a sectional view showing a second embodiment of an apparatus according to the present invention utilizing the Figure 3 sealing member;

Figure 5 is a partial perspective view of a pressure plate which may be used in an apparatus according to the present invention;

Figure 6 is a sectional view showing a third embodiment of an apparatus according to the present invention utilizing the Figure 5 pressure plate; and

Figure 7 shows a known thermal reaction apparatus.

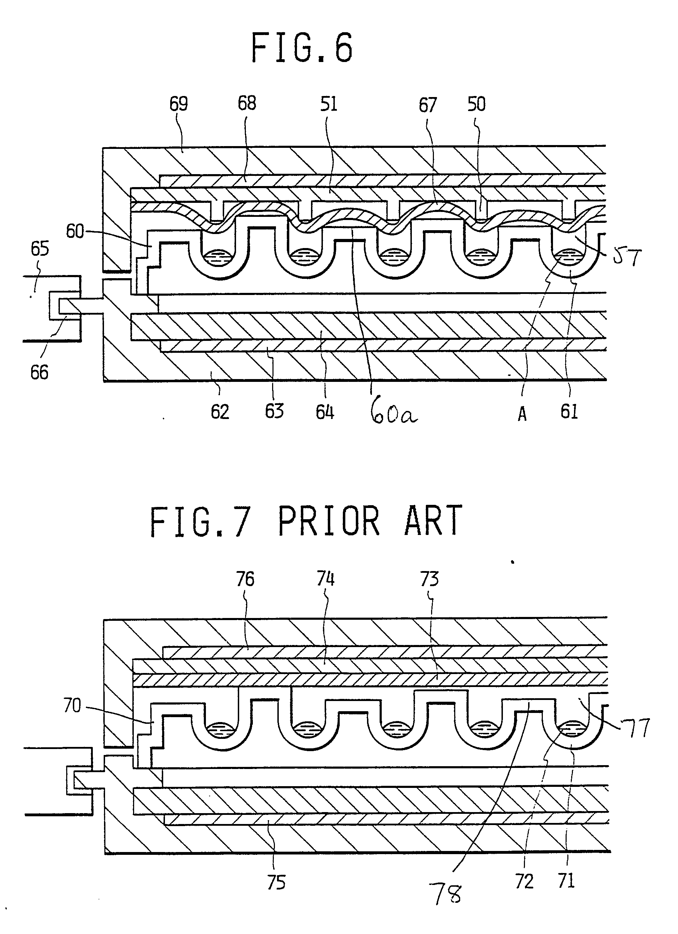

Figure 7 shows a known apparatus in which a reagent tray 70 has a plurality of cavities 71 which contain solution 72. The cavities 71 have openings 77 along a surface 78 of the tray 70 at varying levels. A flat sealing member 73 is disposed on the tray 70 to cover the cavity openings 77. The flat sealing member 73 is composed of a resilient sheet. A pressure plate 74 is disposed on the sealing member 73 to apply pressure to the sealing member 73 so as to force the latter against the highest parts of the surface 78. The assembly of the tray 71, sealing member 73 and pressure plate 74 is heated by a pair of heaters 75 and 76 to effect thermal reaction of the solution 72 within each cavity 71.

However, the sealing member 73 cannot tightly seal all of the cavities 71 due to the varying levels of the cavity openings 77. Thus, some of the solution 72 may evaporate during the thermal reaction to thereby hinder uniform reaction throughout all the cavities 71.

The embodiments of the present invention described below therefore provide for the tight sealing of the tray cavities in a thermal reaction apparatus to prevent evaporation of solutions contained in individual cavities which have varying levels of openings.

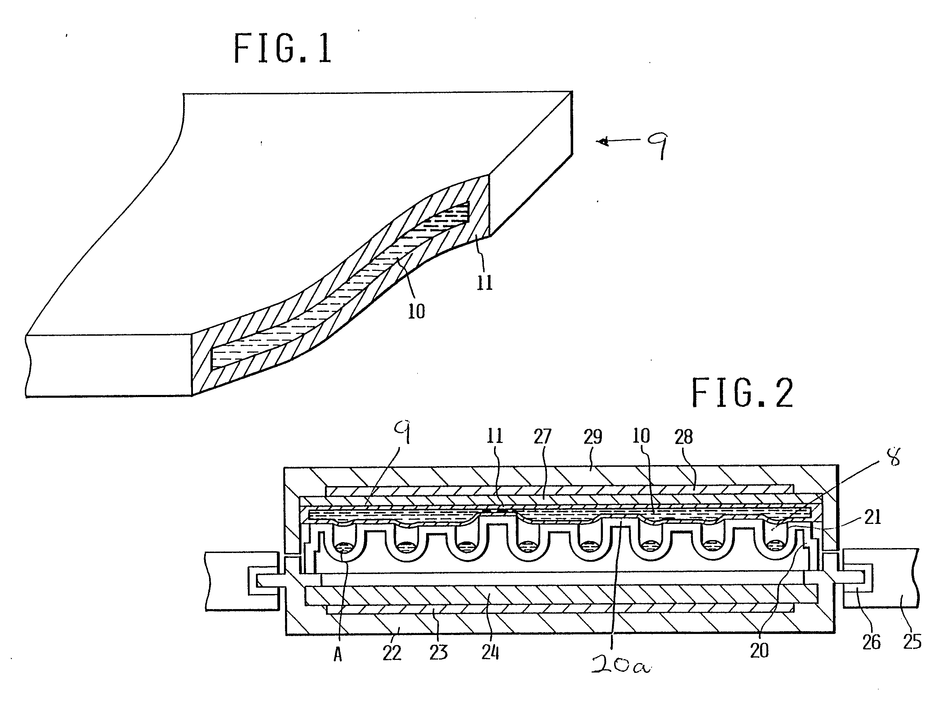

In Figure 1 there is shown a planar, evaporation-preventing, flexible sealing member 9 in which silicone oil 10 or other viscous fluid is sealed within a double layer structure of a resilient sheet 11 such that the silicone oil 10 can flow freely in response to external pressure applied to the elastic sheet 11. If desired, the sealing member 9 can comprise two sheets 11 sealed together at their edges.

Figure 2 is a sectional view of a first embodiment of a thermal reaction apparatus provided with the Figure 1 sealing member 9. A reagent tray 20 is provided in its upper surface portion 20a with a plurality of cavities 21 having openings 8 at different levels in the thickness direction of the tray 20, and is supported on a lower base 22. A lower heater 23 and a lower thermo-conductive plate 24 are superposed on the lower base 22. The lower base 22 is held by a holder 25 through a thermally insulating member 26. The resilient sheet 11 filled with the silicone oil 10, an upper thermo-conductive plate 27 and an upper heater 28 are sequentially superposed within a pressure plate or an upper base 29 such that the resilient sheet 11 is forced by the upper base 29 against the surface 20a of the tray 20 in which the cavities 21 store solution A.

In such a construction, a given pressure is applied to the upper base 29 so that the silicone oil 10 is displaced within the elastic sheet 11 so that the sealing member 9 is locally deformed to fit with the different levels of the openings 8 of the cavities 21 on the tray 20 to thereby apply uniform distribution of the pressure to the whole of the upper surface 20a of the tray 20. Next, the lower heater 23 and the upper heater 28 are operated to effect reaction of the solution A within the cavities 21 without evaporation of the solution A.

As described above, in the first embodiment of the present invention, the sealing member 9 can effect sealing without regard to the difference of the levels of the cavity openings 8 on the tray 20, thereby ensuring that the evaporation of the liquid A within the cavities 21 of the tray 20 can be prevented.

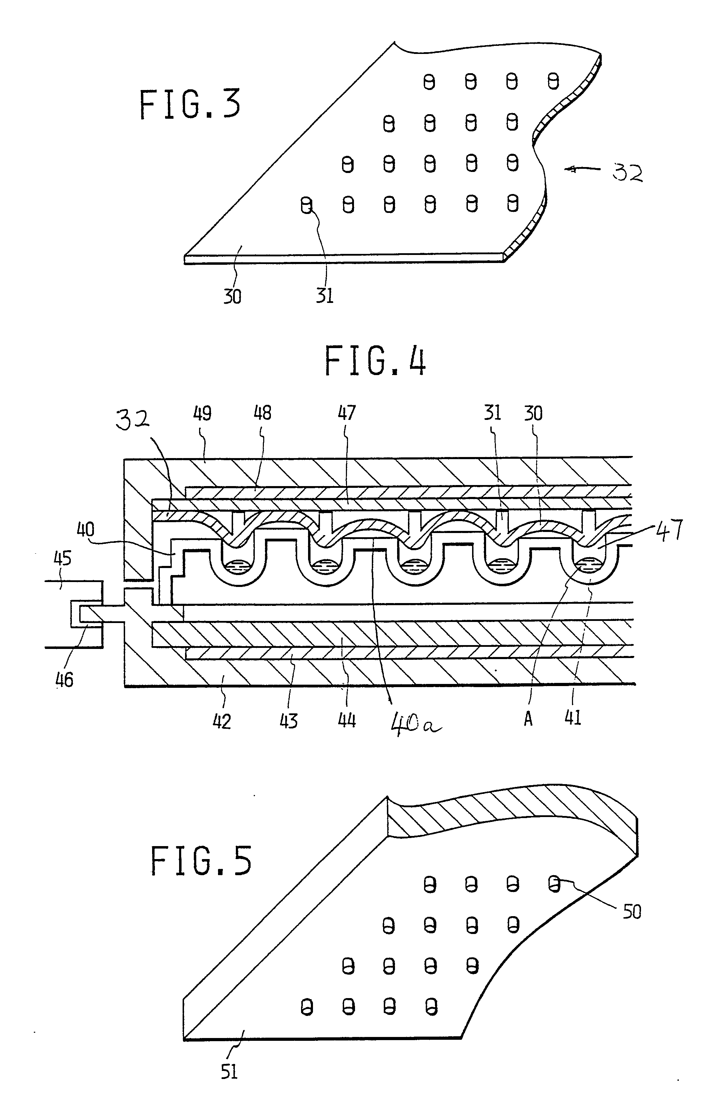

Figure 3 shows another type of flexible sealing member 32 which is composed of a resilient sheet 30 provided thereon with a plurality of projections 31. Figure 4 shows a second embodiment of a thermal reaction apparatus utilizing the Figure 3 sealing member 32.

A reagent tray 40 has an upper surface 4a provided with a plurality of cavities 41 having different levels of openings 47 in the thickness direction of the tray 40. The tray 40 is held on a lower base 42. A lower heater 43 and a lower heat-distributing plate 44 are superposed on each other within the lower base 42. The lower base 42 is held by a holder 45 through a thermally insulating member 46. The resilient sheet 30, which has on its upper face the projections 31, an upper heat-distributing plate 47 and an upper heater 48 are sequentially arranged beneath an upper base or pressure plate 49. The projections 31 are arranged in registration with the centre of the corresponding cavities 41. In such a construction, appropriate pressure is applied to the upper base or pressure plate 49 such that each of the projections 31 effect local deformation of the resilient sheet 30 at the openings 47 of the corresponding cavities 41 so that each of the cavities 41 is sealed and the solution A therein is thermally reacted without evaporation.

Figure 5 is a perspective view showing an evaporation-preventing pressure plate 51. Projections 50 are attached to a lower face of the pressure plate 51.

Figure 6 is a sectional view of a third embodiment of a thermal reaction apparatus utilizing the Figure 5 pressure plate 51. A reagent tray 60 has a surface 60a provided with a plurality of cavities 61 which have different levels or heights of openings 57 in the thickness direction of the tray 60. The tray 60 is held in a lower base 62. A lower heater 63 and a lower heat-distributing plate 64 are superposed within the lower base 62. The lower base 62 is held by a holder 65 through a thermally insulating member 66. A flexible resilient sheet 67, the pressure plate 51 and an upper heater 68 are sequentially superposed on the tray 60 within the upper base 69. The pressure plate 51 serves also as a heat-distributing plate, and is disposed such that the projections 50 are placed in contact with the resilient sheet 67 or sealing member. The projections 50 are positioned in registration with the centres of the respective cavities 61 of the tray 60. In such a construction, by applying appropriate pressure to the upper base 69, the projections 50 deform resilient sheet 67 locally into concavities along the levels of the openings 57 of the cavities 61 to prevent evaporation of solution A stored in the cavities 61 while conducting thermal reaction.

As described above, in the third embodiment of the present invention, the resilient sheet 67 can be fitted without regard to the difference in the levels of the cavity openings 57 so that the evaporation of solution within the plurality of cavities 61 of the tray 60 can be effectively prevented.

## Claims

1. Apparatus for sealing liquid within cavities comprising a tray (20; 40; 60) a surface (20a; 40a; 60a) of which has cavities (21; 41; 61) therein for storing liquid (A), the cavities (21; 41; 61) having openings (8; 47; 57) arranged at varying levels in the thickness direction of the tray (20; 40; 60); a flexible sealing member (9; 32; 67) which contacts the said surface (20a; 40a; 60a); and a pressure plate (29; 49; 51) for applying pressure to the sealing member (9; 32; 67) so as to force the latter against the said surface (20a; 40a; 60a) characterized in that the sealing member (9; 32; 67) is arranged to be forced by the pressure plate (29; 49; 51) into a position in which it seals each of the said openings (8; 47; 57) so as to prevent evaporation of liquid (A) in the said cavities (21; 41; 61).

2. Apparatus as claimed in claim 1 characterized in that the sealing member (9) has a space therein which is filled with viscous fluid (10), the pressure plate (29) causing flow of the viscous fluid (10) so that the sealing member (9) is deformed locally so as to seal each of the openings (27).

3. Apparatus as claimed in claim 1 characterized in that the sealing member (32) has projections (31) thereon arranged in registration with the respective cavities (41), the pressure plate (49) contacting the projections (31) and applying pressure thereto which deforms the sealing member (32) locally so as to seal each of the openings (47).

4. Apparatus as claimed in claim 1 characterized in that the pressure plate (51) has projections (50) which contact the sealing member (67) and which are in registration with the respective cavities (61), whereby the sealing member (67) is deformed locally by the pressure plate (51) so as to seal each of the openings (57).

5. Apparatus as claimed in any preceding claim characterized in that the apparatus is provided with heating means (23, 28; 43, 48; 63, 68) for heating liquid (A) in the cavities (21; 41; 61).

6. An apparatus for sealing liquid within cavities, comprising:
a tray (20) having cavities (21) for storing therein liquid, the cavities (21) having openings (27) arranged at varying levels in the thickness direction of the tray; a planar sealing member (9) disposed on the tray (20) to cover the openings (27), and comprised of a pair of flexible sheets (11) and viscous fluid (10) filled between the flexible sheets (11); and a pressure plate (29) disposed above the planar sealing member (9) for applying thereto pressure effective to locally flow the viscous fluid (10) to enable the sealing member (9) to seal the varying levels of the cavity openings (27) to thereby prevent evaporation of the liquid stored in the cavities (21).

7. An apparatus for sealing liquid within cavities, comprising:
a tray (40) having cavities (41) for storing therein liquid (A), the cavities (41) having openings (47) arranged at varying levels in the thickness direction of the tray; an elastic sealing member (32) disposed on the tray (40) to cover the openings, and having thereon projections (31) arranged in registration with the respective cavities (41); and a pressure plate (49) disposed on the sealing member (32) in contact with the projections (31) for applying thereto pressure effective to deform locally the sealing member (32) through the projections (31) to enable the sealing member (32) to fittably seal the varying levels of the cavity openings (47) to thereby prevent evaporation of the liquid (A) stored in the cavities (41).

8. An apparatus for sealing liquid within cavities, comprising:
a tray (60) having cavities (61) for storing therein liquid (A), the cavities (61) having openings (59) arranged at varying levels in the thickness direction of the tray; a planar sealing member (67) composed of elastic material and disposed on the tray (60) to cover the openings (59); and a pressure plate (51) disposed on the planar sealing member (67) and having projections (50) in contact with the planar sealing member (67) in registration with the respective cavities (61) for applying to the sealing member (67) pressure effective to deform locally the elastic sealing member (67) through the projections (50) to enable the sealing member (67) to fittably seal the varying levels of the cavity openings (59) to thereby prevent evaporation of the liquid (A) stored in the cavities (61).

# FIG.1

9

10

11

EP 0 388 159 A2

# FIG.2

9   11   27   29   10   28

8

21

A   22   23   24   20a   20   26   25

FIG.3

FIG.4

FIG.5

EP 0 388 159 A2

# FIG.6

# FIG.7 PRIOR ART